# EUROPÄISCHE PATENTSCHRIFT

(11) **EP 1 586 779 B1**
(45) Veröffentlichungstag und Bekanntmachung des Hinweises auf die Patenterteilung: **05.01.2011**
(21) Anmeldenummer: 05007132.3
(22) Anmeldetag: 31.03.2005
(51) Int. Cl.: F15B 19/00, F15B 21/08, F15B 21/04

(54) **Steuermodulanordnung und Druckluft-Wartungseinheit**
Control module arrangement and compressed air preparation unit
Agencement modulaire de commande et unité pour la préparation de l'air comprimé

(30) Priorität: 13.04.2004 DE 102004017894
(43) Veröffentlichungstag der Anmeldung: 19.10.2005
(73) Patentinhaber: FESTO AG & Co. KG, 73734 Esslingen (DE)
(72) Erfinder: Gebauer, Günter, Dipl.-Ing., 73728 Esslingen (DE); Garner, Jens, Dipl.-Ing., 70374 Stuttgart (DE); Kleinrad, Klaus, 73257 Köngen (DE)
(74) Vertreter: Bregenzer, Michael

(56) Entgegenhaltungen:
- EP-A2- 0 315 391
- EP-A2- 1 400 702
- WO-A-01/77534
- WO-A-94/04831
- WO-A-03/008250
- DE-A1- 10 258 873

## Beschreibung

Die Erfindung betrifft eine Steuermodulanordnung für eine batterieartig aufgebaute Druckluft-Wartungseinheit, die mehrere aneinander gereihte Wartungsmodule wie z.B. Druckregler, Filter, Öler oder dergleichen aufweist, wobei die Steuermodulanordnung Bus-Kommunikationsmittel zur Kommunikation mit den Wartungsmodulen über einen internen Bus der Wartungseinheit aufweist. Die Erfindung betrifft ferner eine Druckluft-Wartungseinheit mit mehreren aneinander gereihten Wartungsmodulen und einer derartigen Steuermodulanordnung.

Eine derartige Steuermodulanordnung bzw. Druckluft-Wartungseinheit ist beispielsweise aus der EP 1 400 702 A2 bekannt. Bei der bekannten Druckluft-Wartungseinheit ist ein interner Bus vorhanden, über den die Wartungsmodule bzw. ein Steuermodul zur Steuerung der Druckluft-Wartungseinheit sowie weiterer Ventilmodule der Wartungseinheit kommunizieren. An das Bussystem können auch Ein-/Ausgabemodule, SPS-Module oder dergleichen angeschlossen werden. Die bekannte Steuermodulanordnung dient der lokalen Diagnose der Wartungseinheit bzw. der Ventilmodule, die batterieartig an die Wartungsmodule angefügt sind. Die Wartungsmodule und/oder die Ventile der Ventilanordnung haben zum Teil Sensoren bzw. Diagnosemittel, insbesondere Drucksensoren, deren Sensorsignale über den internen Bus an das Steuermodul übertragen werden. Das Steuer - modul weist eine Feldbusschnittstelle auf, über die ein Diagnosezugriff seitens einer externen Steuerzentrale möglich ist, die zur Steuerung und Überwachung der Druckluft-Wartungseinheit sowie der an diese angeschlossenen Ventile dient.

Die DE 102 58 873 A1 betrifft eine Diagnoseeinrichtung für eine fluidtechnische Einrichtung, insbesondere für eine Ventilanordnung und/oder ein Wartungsgerät. Die DE 102 58 873 A1 betrifft ferner eine mit einer derartigen Diagnoseeinrichtung ausgestattete fluidtechnische Einrichtung. Die Diagnoseeinrichtung ist an der fluidtechnischen Einrichtung lokal anordenbar oder angeordnet. Sie weist Diagnosemittel zur Erfassung mindestens eines, einen Verschleiß der fluidtechnischen Einrichtung verursachenden Verschleiß-Parameters und zur Meldung mindestens eines anhand des mindestens einen Verschleiß-Parameters ermittelten Verschleiß-Zustandes auf.

Die Diagnosemöglichkeiten der bekannten Druckluft-Wartungseinheit sind jedoch auf die Druckluft-Wartungseinheit selbst beschränkt.

Es ist daher die Aufgabe der vorliegenden Erfindung die Diagnosefunktionalitäten der eingangs erläuterten Steuermodulanordnung bzw. der Druckluft-Wartungseinheit zu erweitern.

Zur Lösung der Aufgabe sieht die Erfindung bei einer Steuermodulanordnung der eingangs genannten Art vor, dass sie Diagnosemittel zur Kommunikation mit einer Ein-/Ausgabeeinrichtung der Wartungseinheit aufweist, wobei die Ein-/Ausgabeeinrichtung Anschlussmittel zum Anschluss mindestens eines von der Wartungseinheit separaten Diagnose-Sensors und/oder mindestens eines von der Wartungseinheit separaten pneumatischen Druckluftbeeinflussungsaktors aufweist, wobei die Steuermodulanordnung über die Ein-/Ausgabeeinrichtung den mindestens einen Druckluftbeeinflussungsaktor steuern und/oder von dem mindestens einen separaten Diagnose-Sensor Diagnose-Meldungen empfangen kann, und dass die Diagnosemittel zur Erzeugung von Diagnosedaten für eine übergeordnete Diagnosevorrichtung zur Diagnose mindestens einer Funktion der Druckluft-Wartungseinheit anhand von Diagnose-Meldungen des mindestens einen separaten Diagnose-Sensors und/oder der Wartungsmodule ausgestaltet sind, so dass die Druckluft-Wartungseinheit einen Diagnoseknoten bildet. Die erfindungsgemäße Druckluft-Wartungseinheit ist mit einer derartigen Steuermodulanordnung ausgestattet.

Die erfindungsgemäße Steuermodulanordnung bzw. die Druckluft-Wartungseinheit sind durch Anschluss weiterer externer Diagnose-Sensorik oder Diagnose-Aktorik zu einem Diagnoseknoten ausbaubar. Die Diagnosefunktionen beschränken sich nicht mehr auf die bordeigene Sensorik bzw. Aktorik der Druckluft-Wartungseinheit. Vielmehr sind zusätzliche, von der Druckluft-Wartungseinheit separate Diagnosesensoren bzw. Druckluftbeeinflussungsaktoren an die Druckluft-Wartungseinheit anschließbar. Solche Sensoren sind beispielsweise Durchflussmesser, Feuchtigkeitsmesser, Partikelmesser, Druckmesser, Positionssensoren oder dergleichen. Bei dem mindestens einen Druckluftbeeinflussungsaktor handelt es sich beispielsweise um Aktoren zur Beeinflussung von Druck und/oder Strömung der Druckluft, z.B. ein pneumatisches Ventil, einen pneumatischen Regler oder dergleichen.

Vorteilhafte Ausgestaltungen der Erfindung ergeben sich aus den abhängigen Ansprüchen sowie aus der Beschreibung.

Die externe Diagnose-Sensorik bzw. Druckluftbeeinflussungsaktorik ist vorzugsweise einer Baueinheit zugeordnet, die von der Wartungseinheit mit Druckluft versorgt wird. Eine solche Baueinheit ist beispielsweise eine weitere, unterlagerte Wartungseinheit, eine Ventilbatterie oder dergleichen. Der Diagnose-Sensor bzw. der Druckluftbeeinflussungsaktor bilden vorzugsweise einen Bestandteil der Baueinheit.

Die Steuermodulanordnung weist vorzugsweise Steuermittel zur Ansteuerung der Wartungsmodule und/oder des Druckluftbeeinflussungsaktors auf, die die Diagnosemeldungen des separaten Diagnose-Sensors und/oder der Wartungsmodule auswerten. Es ist auch möglich, dass die Steuermittel die Diagnosedaten zur Steuerung der Wartungsmodule bzw. des Druckluftbeeinflussungsaktors auswerten, die anhand der Diagnosemeldungen gebildet sind.

Die Ein-/Ausgabeeinrichtung kann über eine proprietäre Verbindung oder über den internen Bus mit den Diagnosemitteln kommunizieren. Besonders bevorzugt ist es, dass die Ein-/Ausgabeeinrichtung als ein Modul der Druckluft-Wartungseinheit ausgestaltet ist, sozusagen ein Ein-/Ausgabemodul bildet. Es ist aber auch möglich, dass die Ein-/Ausgabeeinrichtung ein Bestandteil der erfindungsgemäßen Steuermodulanordnung ist.

Bei der Bildung der Diagnosedaten führen die Diagnosemittel folgende bevorzugten Maßnahmen durch. Beispielsweise verknüpfen sie Diagnosemeldungen anhand einer oder mehrerer Verknüpfungsbedingungen. Unter Verknüpfung versteht man beispielsweise die Bildung von Relationen, beispielsweise die Verhältnisbildung von zwei oder mehreren Druck-Messwerten, ein Verhältnis zwischen einem Druck-Messwert und einem Durchfluss-Messwert oder dergleichen. Ein Verknüpfungsbedingung kann beispielsweise auch sein, dass bei Überschreiten eines Grenzwertes eine Übertragung von Messwerten, z.B. Druckmesswerten, mit höherer oder niedrigerer Sendefrequenz erfolgt.

Auch eine Datenreduktion ist bei der Bildung der Diagnosedaten vorteilhaft. Beispielsweise übertragen die Diagnosemittel nicht alle Diagnose-Meldungen, sondern Maximalwerte, Minimalwerte, das Überschreiten von Schwellwerten oder dergleichen im Rahmen der Diagnosedaten.

Die Diagnosedaten weisen vorteilhafterweise ein durch einen Internet-Browser darstellbares Format auf, sie sind z.B. in einer Seitenbeschreibungssprache verfasst.

Die Anschlussmittel der Ein-/Ausgabeeinrichtung sind zweckmäßigerweise zum Anschluss eines fluidtechnischen Schlauches mit mindestens einem insbesondere elektrischen Signalleiter zur Verbindung mit mindestens einem Diagnosesensor bzw. dem Druckluftbeeinflussungsaktor ausgestaltet. Auf diese Weise ist eine besonders einfache Verbindung sowohl in fluidtechnischer als auch in elektrischer Hinsicht möglich. Es versteht sich, dass der Schlauch auch einen optischen Leiter enthalten kann, mit dem die Anschlussmittel verbindbar sind.

Vorteilhafterweise ist die erfindungsgemäße Steuermodulanordnung mit Steuermitteln, z.B. einer speicherprogrammierbaren Steuerung, zur Steuerung der Wartungsmodule gegebenenfalls auch weiterer Module, beispielsweise Ventilmodule, ausgestattet.

Zur Kommunikation mit einer übergeordneten Steuervorrichtung bzw. der übergeordneten Diagnosevorrichtung sind zweckmäßigerweise erste und zweite, voneinander separate Kommunikationsmittel vorgesehen. Die ersten Kommunikationsmittel dienen zweckmäßigerweise zum Anschluss an eine Art Steuerungs-Bus und/oder Steuerungs-Netzwerk, der auch zur Steuerung und Überwachung weiterer Baueinheiten, beispielsweise Ventilbatterien, Druck-Wartungseinheiten oder dergleichen dient. Die zweiten Kommunikationsmittel dienen zum Anschluss an einen Diagnose-Bus bzw. an ein Diagnosenetzwerk. An der übergeordneten Diagnosevorrichtung können sozusagen zentral Diagnosen der unterlagerten, angeschlossenen Vorrichtungen, beispielsweise der erfindungsgemäßen Druckluft-Wartungseinheit vorgenommen werden. Die Diagnosevorrichtung ermöglicht beispielsweise eine grafische Darstellung der Druckluft-Wartungseinheit, die grafische Darstellung von Verbrauchskurven, von Messwert-Zeit-Diagrammen, Operantenwerten, z.B. Parametern, Anschlussbelegungen etc., oder sonstiger Diagnosedaten.

Die Steuermodulanordnung bedient vorzugsweise die ersten Kommunikationsmittel vorrangig vor den zweiten Kommunikationsmitteln. Die ersten Kommunikationsmittel sind beispielsweise echtzeitfähig, während die zweiten Kommunikationsmittel eine größere Übertragungsbandbreite als die ersten Kommunikationsmittel aufweisen. Auf diese Weise wird die Steuerbarkeit über die ersten Kommunikationsmittel gewährleistet. Beispielsweise sendet die Steuermodulanordnung über die ersten Kommunikationsmittel weniger Diagnosemeldungen als über die zweiten Kommunikationsmittel. Auf den ersten Kommunikationsmitteln werden beispielsweise systemkritische Diagnosemeldungen ausgegeben. Auf den zweiten Kommunikationsmitteln werden auch sozusagen "normale" Meldungen, beispielsweise zyklische Messwerte oder dergleichen übertragen. Ferner ist z.B. ein Download, und/oder Upload von Parametern und/oder Prüfprogrammen und/oder sonstiger Software an den zweiten Kommunikationsmitteln bevorzugt.

Die Parameter zum Senden von Diagnosedaten mit den ersten und/oder den zweiten Kommunikationsmitteln sind zweckmäßigerweise einstellbar. Vorzugsweise sind erste Sendeparameter für die ersten Kommunikationsmittel und zweite Sendeparameter für die zweiten Kommunikationsmittel bei den jeweiligen ersten und zweiten Kommunikationsmitteln einstellbar. Es ist aber auch möglich, dass an den ersten, den Steuerungs-Kommunikationsmitteln sowohl für die ersten als auch die zweiten Kommunikationsmittel die jeweiligen Sendeparameter für Diagnosedaten einstellbar sind.

Zweckmäßigerweise ist die Steuermodulanordnung im wesentlichen über die ersten Kommunikationsmittel steuerbar. Bei den zweiten Kommunikationsmitteln ist vorteilhafterweise eine Empfangssperre für vorbestimmte Steuerbefehle zur Steuerung der Druckluft-Wartungseinheit vorhanden. Somit wird verhindert, dass an den zweiten, für Diagnosezwecke vorgesehenen Kommunikationsmitteln Steuerbefehle empfangen und von der Steuermodulanordnung ausgewertet werden.

Die ersten oder zweiten Kommunikationsmittel weisen vorteilhafterweise eine Bus-Schnittstelle auf, beispielsweise eine Feldbus-Schnittstelle, eine Ethernet-Schnittstelle oder dergleichen. Insbesondere bei den zweiten Diagnose-Kommunikationsmitteln ist eine drahtlose Kommunikation, z.B. über Wireless-LAN, Bluetooth oder dergleichen bevorzugt.

Die Steuermodulanordnung ist zweckmäßigerweise in einem modularen Konzept verwirklicht, bei dem ein Steuermodul Steuermittel zur Steuerung der Wartungsmodule enthält und ein Diagnosemodul die Diagnosemittel. Es versteht sich, dass auch eine kombinierte Lösung möglich ist, bei der die Steuermittel und Diagnosemittel in einem Modul vereint sind. Bei der modularen Lösung kommunizieren das Steuermodul und das Diagnosemodul zweckmäßigerweise über den internen Bus der Druckluft-Wartungseinheit. Die für Steuerungszwecke vorgesehenen ersten Kommunikationsmittel sind vorteilhafterweise dem Steuermodul und die zweiten, für Diagnosezwecke ausgestalteten Kommunikationsmittel dem Diagnosemodul zugeordnet.

Weiterhin ist es vorteilhaft, eine Bediengeräte-Schnittstelle vorzusehen, über die die Steuermodulanordnung bzw. die Druckluft-Wartungseinheit lokal bedienbar und/oder parametrierbar ist. Vorteilhafterweise ist an der Bediengeräte-Schnittstelle auch ein lokales Visualisierungsgerät, beispielsweise zur Anzeige von Diagnosedaten oder dergleichen, anschließbar.

Nachfolgend werden Ausführungsbeispiele der Erfindung anhand der Zeichnung erläutert. Es zeigen:
- Figur 1: ein pneumatisches System mit einer erfindungsgemä- ßen Druckluft-Wartungseinheit, die eine erfindungs- gemäße Steuermodulanordnung enthält und in ein Di- agnosenetzwerk und ein Steuernetzwerk eingebunden ist,
- Figur 2: eine schematische Ansicht der Steuermodulanordnung gemäß Figur 1,
- Figur 3: ein Druckluftschlauch mit Signalleitern zum An- schluss an die Druckluft-Wartungseinheit gemäß Fi- gur 1, und
- Figur 4: ein weiteres pneumatisches System, in das erfin- dungsgemäße Druckluft-Wartungseinheiten eingebunden sind.

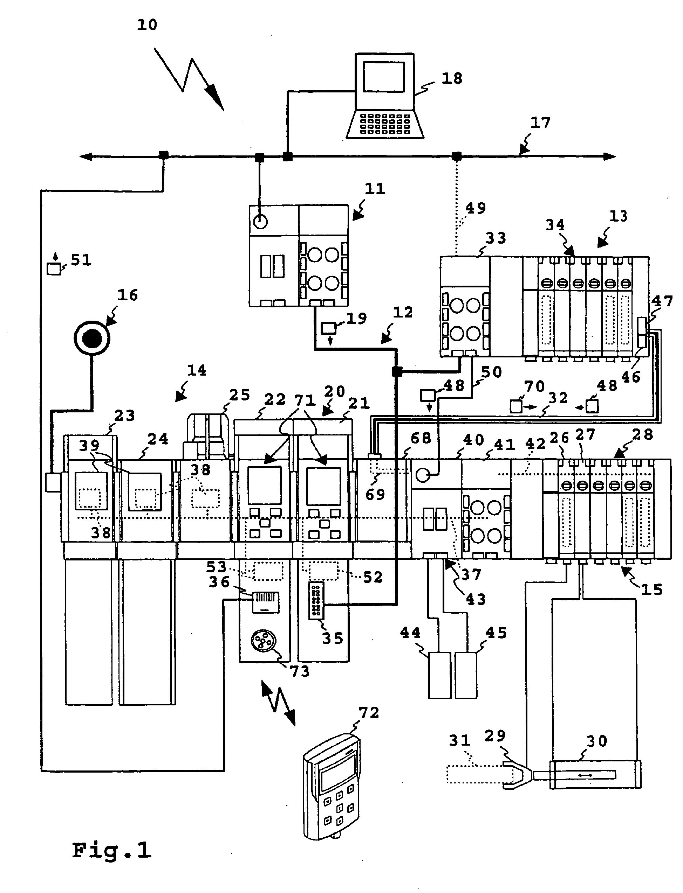

Bei einem pneumatischen System 10 gemäß Figur 1 steuert eine Steuervorrichtung 11 über ein Steuernetzwerk 12 eine Ventilbatterie 13, eine Druckluft-Wartungseinheit 14 sowie eventuell weitere, nicht dargestellte pneumatische Funktionseinheiten. Die Druckluft-Wartungseinheit 14 versorgt die Ventilbatterie 13 sowie eine Ventilbatterie 15, die einen Bestandteil der Druckluft-Wartungseinheit 14 bildet, mit Druckluft aus einer Druckluftquelle 16, die die Druckluft-Wartungseinheit 14 aufbereitet, beispielsweise filtert, ölt oder dergleichen.

Die Steuervorrichtung 11 ist beispielsweise eine speicherprogrammierbare Steuerung, die Steuerbefehle 19 an die Druckluft-Wartungseinheit 14 bzw. deren Ventilbatterie 15 sowie an die Ventilbatterie 13 sendet.

Bei der Druckluft-Wartungseinheit 14 wertet eine Steuermodulanordnung 20 mit einem Steuermodul 21 und einem Diagnosemodul 22 die Steuerbefehle 19 zur Ansteuerung von Wartungsmodulen 23, 24, 25 sowie Ventilmodulen 26, 27 und weiteren Ventilmodulen 28 der Ventilbatterie 15 aus. Die Wartungsmodule 23, 24, 25 enthalten beispielsweise ein Einschalt-Ventilmodul, ein Filtermodul, ein Druckreglermodul, ein Ölermodul oder dergleichen. Die Ventilmodule 26, 27, 28 dienen zur Ansteuerung pneumatischer Aktoren, beispielsweise eines Greifers 29 und eines pneumatischen Aktors 30, z.B. eines Linearantriebs, beispielsweise zum Ergreifen und Handhaben eines Objekts 31. Die Ventilmodule 26, 27 beaufschlagen den Aktor 30 bzw. den Greifer 29 durch die Wartungsmodule 23 bis 25 aufbereiteter Druckluft, um sie zu betätigen.

Die Wartungseinheit 14 versorgt über eine Druckluftleitung 32 die Ventilbatterie 13 mit aufbereiteter Druckluft. Bei der Ventilbatterie 13 steuert eine lokale Steuervorrichtung 33 Ventilmodule 34 anhand der Steuerbefehle 19. Die Ventilmodule 34 beaufschlagen nicht dargestellte pneumatische Aktoren mit Druckluft aus der Druckluftleitung 32.

Die Steuermodulanordnung 20 bzw. die Wartungseinheit 14 bilden einen Diagnoseknoten innerhalb des Diagnosenetzwerks 17, z.B. ein Ethernet-, Profinet-, Modbus TCP-Netzwerk oder dergleichen. Eine weitere vorteilhafte Eigenschaft ist, dass erste und zweite Kommunikationsmittel 35, 36 bei der Druckluft-Wartungseinheit 14 bzw. der Steuermodulanordnung 20 vorhanden sind, so dass für Steuerzwecke und Diagnosezwecke separate Kommunikationsmittel vorgesehen sind. Bei der Steuermodulanordnung 20 ist die Aufgabenteilung Diagnose-Steuerung zusätzlich dadurch verbessert, dass für Steuerungsaufgaben und Diagnoseaufgaben jeweils dedizierte Module, nämlich das Steuermodul 21 und das Diagnosemodul 22, vorgesehen sind. Das Steuermodul 21 ist durch Diagnoseaufgaben nicht belastet. Dennoch ist es vorteilhaft, dass das Steuermodul 21 vorbestimmte, insbesondere systemkritische Diagnosemeldungen über das Steuernetzwerk 12 meldet, beispielsweise GrenzwertÜberschreitungsmeldungen, Alarmmeldungen oder dergleichen.

Die Module der Wartungseinheit 14, das heißt vorliegend beispielsweise die Steuermodulanordnung 20 und die Wartungsmodule 23, 24, 25, kommunizieren über einen internen Bus 37 der Wartungseinheit 24. Bei dem Bus 37 kann es sich um einen proprietären Bus handeln. Es ist aber auch möglich, dass der Bus 37 als ein Feldbus, ein Ethernet-Bus oder dergleichen ausgestaltet ist. Über den Bus 37 können die Module der Wartungseinheit 14 Meldungen oder Steuerbefehle versenden und empfangen, wobei beispielsweise das Diagnosemodul 22 von den Wartungsmodulen 23, 24, 25 Diagnosemeldungen erhält und das Steuermodul 21 Steuerbefehle an die Wartungsmodule 23, 24, 25 sendet, beispielsweise Einschaltbefehle, Dosierbefehle für eine zu dosierende Ölmenge oder dergleichen. Die Wartungsmodule 23, 24, 25 besitzen für die Kommunikation mit dem Bus 37 sowie für Steuerungsaufgaben beispielsweise Controller 38. Zum Teil weisen die Wartungsmodule 23 bis 25 Ein-/Ausgabemittel 39, beispielsweise Bedientasten, Leuchtanzeigen oder dergleichen auf.

Ferner sind an den internen Bus 37 Ein-/Ausgabemodule 40, 41 angeschlossen. Über das Ein-/Ausgabemodul 41 kann das Steuermodul 41 Steuerbefehle an die Ventilmodule 26 bis 28 senden. Das Ein-/Ausgabemodul 41 gibt diese Befehle auf einem Bus 42 an die Ventilmodule 26 bis 28 aus. Ferner kann das Ein-/Ausgabemodul 41 auf dem Bus 42 Meldungen von den Ventilmodulen 26 bis 28 empfangen und dem Steuermodul 21 bzw. dem Diagnosemodul 22 melden. Bei diesen Meldungen handelt es sich beispielsweise um Störungsmeldungen, Schaltzustandsmeldungen oder dergleichen. Es versteht sich, dass auch eine Variante möglich ist, bei der die Ventilmodule 26 bis 28 direkte Busteilnehmer am Bus 37 sind.

Das Ein-/Ausgabemodul 40 ist dem Diagnosemodul 22 zugeordnet. Das Ein-/Ausgabemodul 40 bildet eine Ein-/Ausgabeeinrichtung mit Anschlussmitteln 43 zum Anschluss von von der Wartungseinheit 14 separaten Diagnose-Sensoren, beispielsweise Sensoren 44, 45, 46. Ferner sind an die Anschlussmittel 43, die beispielsweise entsprechende elektrische und/oder optische Kontakte enthalten, von der Wartungseinheit separate Druckluftbeeinflussungsaktoren, z.B. ein Schaltventil 47, anschließbar. Die Diagnose-Sensoren 44 sind beispielsweise Temperatursensoren, Drucksensoren, Partikelmesser oder dergleichen, die an von der Wartungseinheit 14 separaten Baueinheiten angeordnet sind, beispielsweise dem Aktor 30 und der Ventilbatterie 13. Der Diagnosesensor 46 überwacht beispielsweise den Druck im Anschlussbereich der Druckluftleitung 32 an der Ventilbatterie 13 und sendet als Diagnosemeldungen 48 beispielsweise Meldungen über den Druck, die Temperatur einen Partikelgehalt oder dergleichen im Bereich der Ventilbatterie 13.

Prinzipiell wäre es zwar möglich, dass das Steuermodul 33 der Ventilbatterie 13 Diagnosemeldungen über eine Verbindung 49 auf das Diagnosenetzwerk 17 ausgibt. Vorliegend jedoch bildet die Wartungseinheit bzw. die Steuermodulanordnung 20 einen Diagnoseknoten innerhalb des Diagnosenetzwerks 17, an den die Ventilbatterie 13 bzw. deren Steuermodul 33 Diagnosemeldungen 48 über eine Verbindung 50 meldet. Die Verbindung 50 führt ebenfalls zum Ein-/Ausgabemodul 40. Es ist möglich, dass beide Verbindungen 49, 50 vorhanden sind, wobei die Ventilbatterie 13 Diagnosemeldungen teilweise direkt über die Verbindung 49 auf das Diagnosenetzwerk 17 ausgibt und teilweise, z.B. soweit sie die Druckluftaufbereitung betreffen und beispielsweise Druckmesswerte, Feuchtigkeitsmesswerte oder dergleichen enthalten, auf die Verbindung 50 ausgibt, so dass das Diagnosemodul 22 diese Diagnosemeldungen 48 zur Bildung von Diagnosedaten 51 auswerten kann.

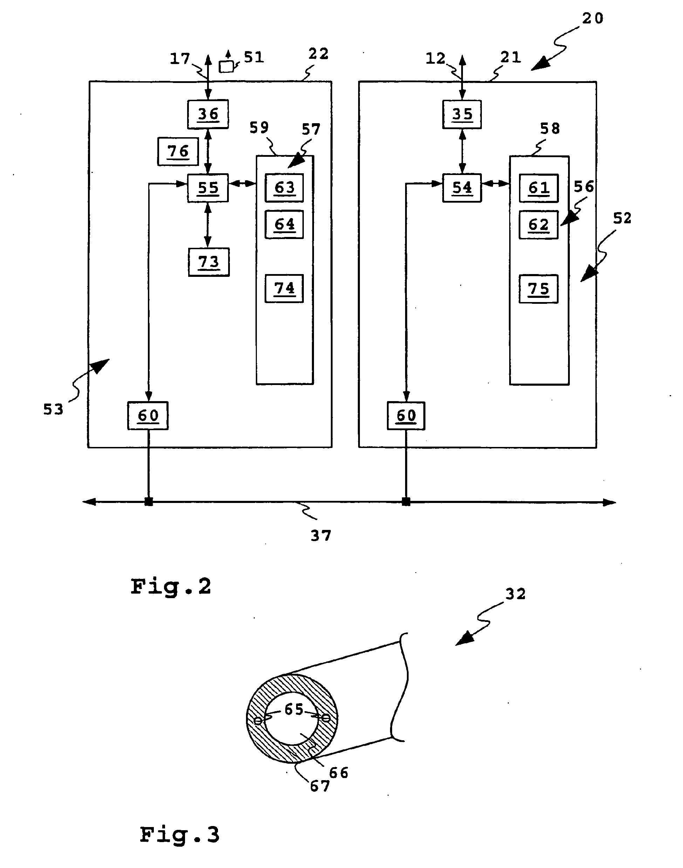

Die Funktionen von Steuermitteln 52 des Steuermoduls 21 zur Steuerung der Wartungseinheit 14 und von Diagnosemitteln 53 des Diagnosemoduls 22 wird nachfolgend anhand der Figur 2 erläutert.

Die Steuermittel 52 und die Diagnosemittel enthalten jeweils einen Prozessor 54, 55 zur Ausführung von Programmcode von Programmmodulen 56, 57, die in Speichermitteln 58, 59 gespeichert sind. Die Speichermittel 58, 59 enthalten beispielsweise flüchtigen und/oder nicht flüchtigen Speicher. Der Programmcode der Programmmodule 56, 57 enthält Instruktionen zur Realisierung der Steuerfunktionen und Diagnosefunktionen des Steuermoduls 21 bzw. des Diagnosemoduls 22. Die Prozessoren 54, 55 sind mit den Speichermitteln 58, 59 sowie mit Kommunikationsmitteln des Steuermoduls 21 bzw. des Diagnosemoduls 22 über interne Verbindungen verbunden, die durch Pfeile schematisiert angedeutet sind. Beispielsweise enthalten die Module 21, 22 Bus-Controller 60 als Bus-Kommunikationsmittel zur Kommunikationen am internen Bus 37. Ferner kommunizieren die Prozessoren 54, 55 mit Hilfe der Kommunikationsmittel 35, 36 mit dem Steuernetzwerk 12 und dem Diagnosenetzwerk 17. Die Kommunikationsmittel 35 enthalten beispielsweise einen Feldbus-Controller für das Steuernetzwerk 12, bei dem es sich zweckmäßigerweise um ein Feldbus-Netzwerk handelt, beispielsweise ein CAN-, ein ASi-Netzwerk, Profibus, Interbus, Devicenet oder dergleichen (CAN = Controller Area Network, ASi = Aktor-Sensor-Interface).

Die zweiten Kommunikationsmittel 36 enthalten zweckmäßigerweise einen Ethernet-Controller, einen W-LAN-Controller (= Wireless LAN) oder dergleichen für das Diagnosenetzwerk 17, das zweckmäßigerweise eine größere Übertragungsbandbreite als das Steuernetzwerk 12 aufweist. Das Steuernetzwerk 12 hingegen ist zweckmäßigerweise echtzeitfähig und somit optimal für Steuerungsaufgaben ausgelegt.

Bei der Steuermodulanordnung 20 sind für Steuerungsaufgaben und Diagnoseaufgaben jeweils separate Prozessoren 54, 55 vorhanden. Es versteht sich, dass auch weitere Prozessoren vorhanden sein können. Aber auch eine Bauweise mit nur einem einzigen Prozessor ist möglich. Insbesondere bei dieser Variante ist bevorzugt, dass dieser einzige Prozessor die Steuerungsaufgaben vorrangig vor den Diagnoseaufgaben erfüllt, beispielsweise die ersten Kommunikationsmittel 35 für das Steuernetzwerk 12 vorrangig vor den zweiten Kommunikationsmitteln 36 für das Diagnosenetzwerk 17 bedient.

Die Programmmodule 56 des Steuermoduls 21 enthalten beispielsweise ein SPS-Modul (SPS = speicherprogrammierbare Steuerung) zur Steuerung der Wartungsmodule 23 bis 25 und/oder der Ventilmodule 26, 27, 28. Ferner ist ein Diagnoseprogrammmodul 62 vorhanden, das insbesondere systemkritische Diagnosemeldungen auf dem Steuernetzwerk 12 ausgibt, beispielsweise wenn ein Filter bis zu einer kritischen Grenze verschmutzt ist, ein Additiv für die aufzubereitende Druckluft nahezu verbraucht ist, eine Störung bei einem der Wartungsmodule 23, 24, 25 oder der Ventilmodule 26, 27, 28 aufgetreten ist, oder dergleichen. Derartige systemkritische Diagnose-Meldungen würden die Funktionsfähigkeit der Wartungseinheit 14 beeinträchtigen und somit die Durchführung von Steuerbefehlen 19 der Steuervorrichtung 11 beeinträchtigen, wenn nicht gar unmöglich machen.

Wesentlich weitergehende Diagnosefunktionen als das Steuermodul 21 bietet das Diagnosemodul 22, dessen Programmmodule 57 ebenfalls ein Diagnose-Programmmodul 63 aufweisen. Das Diagnose-Programmmodul 63 verarbeitet die Diagnose-Meldungen 48 und generiert aus diesen Diagnosedaten 51, die es auf dem Diagnosenetzwerk 17 ausgibt. Die Diagnosedaten 51 enthalten beispielsweise in regelmäßigen Zeitabständen einen Füllstand eines Additivs, das eines der Wartungsmodule 23, 24 oder 25 der Druckluft aus der Druckluftquelle 16 zufügt, einen Differenzdruckwert zwischen Drücken am Eingang und am Ausgang des als Filter ausgestalteten Wartungsmoduls 24 oder dergleichen. Aus einem derartigen Differenzdruck kann beispielsweise der Verschmutzungsgrad des Filters des Wartungsmoduls 24 ermittelt werden. Weiterhin können die Diagnosedaten 51 beispielsweise regelmäßig Partikelwerte von in der Druckluft enthaltenen Partikeln, Feuchtigkeitswerte oder dergleichen enthalten.

Ferner enthalten die Programmmodule 57 des Diagnosemoduls 22 ein Visualisierungsmodul 64 zur Ausgabe von Visualisierungsdaten im Rahmen der Diagnosedaten 51. Diese Visualisierungsdaten, die z.B. an der Diagnosevorrichtung 18 ausgegeben werden können, enthalten beispielsweise eine grafische Abbildung der Wartungseinheit 14 und/oder deren Module, Messwert-ZeitDiagramme, Operantenwerte, z.B. Parameter, Anschlussbelegungen etc., oder sonstiger Diagnosedaten. Somit steht an der Diagnosevorrichtung 18 z.B. ein Abbild der Wartungseinheit zur Verfügung. In den Visualisierungsdaten können beispielsweise die einzelnen Wartungsmodule 23, 24, 25 grafisch in Abhängigkeit von ihrem jeweiligen Betriebszustand (beispielsweise gestört/nicht gestört) dargestellt werden.

Besonders bevorzugt ist eine Selbstkonfiguration der Wartungseinheit 14, bei der sich die Module der Wartungseinheit 14 bei der Steuermodulanordnung 20 sozusagen selbstständig anmelden. Beispielsweise senden die Wartungsmodule 23, 24, 25 Idenitifizierungskennungen und/oder ihre zumindest teilweise technischen Daten über den internen Bus 37 an die Steuermodulanordnung 20. Anhand dieser Identifizierungskennungen bzw. technischen Daten ist beispielsweise das Diagnosemodul 22 in der Lage, die Wartungsmodule 23 bis 25 an der Diagnosevorrichtung 18 grafisch darzustellen.

Das Diagnose-Programmmodul 63 kann Diagnose-Meldungen 48 miteinander verknüpfen und somit sozusagen verknüpfte Diagnosedaten 51 bilden. Dabei bildet das Diagnose-Programmmodul beispielsweise Relationen zwischen Druckwerten, die von den Wartungsmodulen 23, 24 und 25 ermittelt werden. Auf demselben Wege können auch Relationen von Durchflussmesswerten, beispielsweise zur Ermittlung eines Verbrauchsmesswertes der Ventilbatterien 13 und 15, gebildet werden. Die Diagnosedaten 51 können ferner Maximalwerte und/oder Minimalwerte, beispielsweise zur Ermittlung eines maximalen Druckluftbedarfes oder dergleichen, enthalten. Ferner kann das Diagnose-Programmmodul 63 eine Datenreduktion durchführen und vorbestimmte Meldungen der Diagnose-Meldungen 48 nur in vorbestimmten zeitlichen Abständen, beispielsweise jede Minute, jede Sekunde oder dergleichen im Rahmen der Diagnosedaten 51 am Diagnosenetzwerk 17 ausgeben. Das Diagnose-Programmmodul 63 kann auch Durchschnittswerte bilden.

Ferner ist es möglich, dass das Diagnose-Programmmodul 63 den Datenverkehr zwischen den Modulen der Wartungseinheit 14 sozusagen mithört und aus diesem Datenverkehr Diagnosedaten 51 generiert. Dabei ist eine Verknüpfung dieser DiagnoseMeldungen zweckmäßig, bei der das Diagnose-Programmmodul 63 beispielsweise aus Druckmesswerten, die die Wartungsmodule 23, 25 ermitteln, Quotienten bildet. Die Diagnosedaten 51, insbesondere die vom Visualisierungsmodul 64 erzeugten Visualisierungsdaten, weisen zweckmäßigerweise ein mittels eines Internet-Browsers darstellbares Format auf, beispielsweise HTML (HTML = Hypertext Markup Language) .

Die Steuermodulanordnung 20 steuert den von der Wartungseinheit 14 separaten Druckluftbeeinflussungsaktor 47 in Gestalt eines Schaltventils, Proportionalventils oder dergleichen in Abhängigkeit von den Diagnose-Meldungen 48. Wenn der Diagnose-Sensor 46 beispielsweise einen zu hohen oder zu geringen Druck mit den Diagnose-Meldungen 48 meldet, schaltet das Diagnose-Programmmodul 63 das Ventil 47 zur Lösung dieses Problems, öffnet das Ventil 47 beispielsweise weiter oder schließt es. Es ist auch möglich, dass das SPS-Modul 61 des Steuermoduls 21 das Schaltventil 47 in Abhängigkeit von den Diagnose-Meldungen 48 des Sensors 46 betätigt.

Die Druckluft-Leitung 32 enthält einen Druckluftkanal 66, der durch eine Wandung 67 begrenzt ist. In der Wandung 67 verlaufen optische oder elektrische Signalleiter 65 zur Kommunikation mit von der Wartungseinheit 14 separaten DiagnoseSensoren und/oder Druckbeeinflussungsventilen, vorliegend dem Diagnose-Sensor 46 und dem Schaltventil 47. Somit ist es nicht erforderlich, weitere Signal-Verbindungen für Diagnosezwecke zwischen der Wartungseinheit 14 und der Ventilbatterie für Diagnoseaufgaben zu installieren. Die Druckluft-Leitung 32 ist an ein Anschlussmodul 68 der Wartungseinheit 14 angeschlossen. Das Anschlussmodul 68 ist mittels verbindungsleitungen 69 mit dem Ein-/Ausgabemodul 40 verbunden, so dass das Ein-/Ausgabemodul 40 die Diagnosemeldungen 48 des Sensors 46 empfangen kann und Steuerbefehle 70 zur Ansteuerung des Aktors 47 ausgeben kann. Es wäre auch eine Variante möglich, bei der das Anschlussmodul 68 beispielsweise einen Bus-Controller oder sonstige Kommunikationsmittel zur Kommunikation am internen Bus 37 aufweist, um mit der Steuermodulanordnung 20 zu kommunizieren.

Die Steuermodulanordnung 20, vorliegend das Steuermodul 21 sowie das Diagnosemodul 22, weisen Ein-/Ausgabemittel 71 z.B. an deren Vorderseite auf. Über die Ein-/Ausgabemittel 71, die beispielsweise Drucktasten, ein Display oder dergleichen enthalten, kann die Steuermodulanordnung 20 Funktionen der Wartungseinheit 14 visualisieren bzw. lokale Bedienbefehle empfangen.

Ferner ist eine lokale Bedienung, Parametrierung, Visualisierung oder dergleichen mit Hilfe eines Bediengeräte 72 möglich, das an eine Bediengeräte-Schnittstelle 73 drahtgebunden oder, was bevorzugt ist, drahtlos angekoppelt werden kann. Beispielsweise kann das Diagnose-Programmmodul 63 an der Schnittstelle 63 die Diagnosedaten 51 ganz oder teilweise ausgeben. Eine drahtgebundene Variante der Bediengeräte-Schnittstelle 73 weist vorzugsweise eine hohe elektrische Schutzart und/oder industrietaugliche Daten-Übertragungsmethoden auf. Bei dem Bediengerät 72 handelt es sich vorzugsweise um ein für Industrie-Umgebungen geeignetes MMI (Man Machine Interface), beispielsweise um einen Personal-Computer, ein Notebook, einen Personal Digital Assistent (PDA) oder dergleichen.

Vorzugsweise ist die Steuermodulanordnung 20 parametrierbar, wobei beispielsweise Umfang, Qualität oder sonstige Eigenschaften der Diagnosedaten 51 mittels Parametern 74 einstellbar sind. Beispielsweise sendet die Diagnose-Vorrichtung 18 die Parameter 74 an das Diagnosemodul 22 über das Diagnosenetzwerk 17. Die Parameter 74 enthalten beispielsweise Schwellwerte, Sendeabstände zwischen zu sendenden Messwerten, Einschalt-/Ausschaltbefehle zum Senden von Messwerten oder dergleichen. Es ist auch möglich, Programmteile, beispielsweise zur Bildung von Quotienten, zur Bildung grafischer Visualisierungsdaten oder dergleichen von der Diagnosevorrichtung 18 an das Diagnosemodul 22 übermittelt werden. In entsprechender Weise kann das Diagnose-Programmmodul 62 des Steuermoduls 21 mittels Parametern 75 parametriert werden. Beispielsweise sendet die Steuervorrichtung 11 die Sendeparameter 75 an das Steuermodul 21.

Insbesondere dann, wenn die Steuermodulanordnung 20 nur ein einziges Modul enthält, das sowohl die Diagnosemittel als auch die Steuermittel 52, 53 enthält, ist es bevorzugt, dass eine Sperreinrichtung 76 an den zweiten Kommunikationsmitteln 36 den Empfang vorbestimmter Steuerbefehle, beispielsweise zur Ansteuerung der Ventilmodule 26, 27, 28 blockiert.

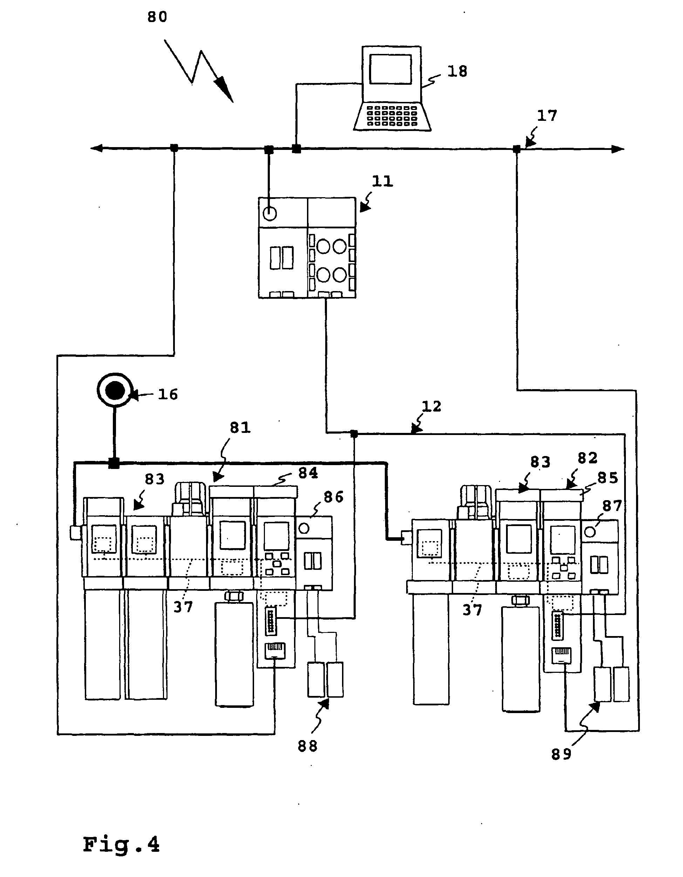

Anhand von Figur 4 werden nachfolgend weitere Varianten erfindungsgemäßer Wartungseinheiten vorgestellt. Soweit in Figur 4 Module oder Komponenten dargestellt sind, die dieselben Funktionen wie die entsprechenden Module gemäß Figur 1 aufweisen, sind dieselben Bezugszeichen verwendet. Eine nähere Erläuterung erfolgt daher nicht.

Bei einem pneumatischen System 80 gemäß Figur 4 steuert die Steuervorrichtung 11 über das Steuernetzwerk 12, das beispielsweise einen Feldbus enthält, Druckluft-Wartungseinheiten 81, 82, die Druckluft aus der Druckluftquelle 16 aufbereiten, beispielsweise filtern, trocknen, ölen bzw. deren Druck beeinflussen. Hierfür enthalten die Wartungseinheiten 81, 82 Wartungsmodule 83, die wie die Wartungsmodule 23 bis 25 aneinandergereiht sind und über einen internen Bus 37 miteinander kommunizieren. Zur Steuerung und Diagnose der Wartungseinheiten 81, 82 sind Steuermodule 84, 85 vorhanden, die in der Art der Steuermodulanordnung 20 in einer Baueinheit kombiniert sowohl Wartungsaufgaben als auch Diagnoseaufgaben erfüllen. Dementsprechend sind die Steuermodule 84, 85 sowohl an das Steuernetzwerk 12 über erste Kommunikationsmittel als auch über das an das Diagnosenetzwerk 17 über zweite Kommunikationsmittel angeschlossen, die bei jedem der Steuermodule 84, 85 vorhanden sind. Ferner kann jedes der Steuermodule 84, 85 als ein Diagnoseknoten dienen. Zu diesem Zweck sind Ein-/Ausgabemodule 86, 87 vorhanden, mit denen die Steuermodule 84, 85 jeweils über den internen Bus 37 kommunizieren. An die Ein-/Ausgabemodule 86, 87 sind jeweils Diagnosesensoren 88, 89 angeschlossen. Die Steuermodule bzw. Diagnosemodule 84, 85 können von den Diagnose-Sensoren 88, 89 über die Ein-/Ausgabemodule 86, 87 Diagnosemeldungen empfangen. Bei den Sensoren 88, 89 handelt es sich beispielsweise um Druckluftsensoren oder dergleichen.

## Patentansprüche

1. Steuermodulanordnung für eine batterieartig aufgebaute Druckluft-Wartungseinheit (14), die mehrere aneinander gereihte Wartungsmodule (23-25) wie z.B. Druckregler, Filter, Öler oder dergleichen und eine Ein-/Ausgabeeinrichtung (40) aufweist, wobei die Steuermodulanordnung (20) Bus-Kommunikationsmittel zur Kommunikation mit den Wartungsmodulen (23-25) über einen internen Bus (37) der Wartungseinheit (14) aufweist, **dadurch gekennzeichnet, dass** sie Diagnosemittel (53) zur Kommunikation mit der Ein-/Ausgabeeinrichtung (40) der Wartungseinheit (14) aufweist, wobei die Ein-/Ausgabeeinrichtung (40) Anschlussmittel (43) zum Anschluss mindestens eines von der Wartungseinheit (14) separaten Diagnose-Sensors (44-46) und/oder mindestens eines von der Wartungseinheit (14) separaten pneumatischen Druckluftbeeinflussungsaktors (47) aufweist, wobei die Steuermodulanordnung (20) über die Ein-/Ausgabeeinrichtung (40) den mindestens einen Druckluftbeeinflussungsaktor (47) steuern und/oder von dem mindestens einen separaten Diagnose-Sensor (44-46) Diagnose-Meldungen (48) empfangen kann, und dass die Diagnosemittel (53) zur Erzeugung von Diagnosedaten (51) für eine übergeordnete Diagnosevorrichtung (18) zur Diagnose mindestens einer Funktion der Druckluft-Wartungseinheit (14) anhand von Diagnose-Meldungen (48) des mindestens einen separaten Diagnose-Sensors (44-46) und/oder der Wartungsmodule (23-25) ausgestaltet sind, so dass die Druckluft-Wartungseinheit (14) einen Diagnoseknoten bildet.

2. Steuermodulanordnung nach Anspruch 1, **dadurch gekennzeichnet, dass** der mindestens eine separate Diagnose-Sensor (44-46) und/oder der mindestens eine Druckluftbeeinflussungsaktor (47) einer separaten, insbesondere von der Wartungseinheit (14) mit Druckluft versorgten Baueinheit, insbesondere einer Wartungseinheit (14) oder einer Ventilbatterie, zugeordnet ist.

3. Steuermodulanordnung nach Anspruch 1 oder 2, **dadurch gekennzeichnet, dass** sie zur Ansteuerung der Wartungsmodule (23-25) und/oder des mindestens einen von der Wartungseinheit (14) separaten Druckluftbeeinflussungsaktors (47) anhand der Diagnose-Meldungen (48) des mindestens einen separaten Diagnose-Sensors (44-46) und/oder der Wartungsmodule (23-25) ausgestaltet ist.

4. Steuermodulanordnung nach einem der vorhergehenden Ansprüche, **dadurch gekennzeichnet, dass** der mindestens eine Druckluftbeeinflussungsaktor (47) ein pneumatisches Ventil und/oder einen pneumatischen Regler umfasst.

5. Steuermodulanordnung nach einem der vorhergehenden Ansprüche, **dadurch gekennzeichnet, dass** der mindestens eine Sensor einen magnetischen Sensor und/oder einen optischen Sensor und/oder einen Drucksensor und/oder einen Temperatursensor und/oder eine Durchflussmesseinrichtung und/oder einen elektrischen Messkontaktgeber umfasst.

6. Steuermodulanordnung nach einem der vorhergehenden Ansprüche, **dadurch gekennzeichnet, dass** die Diagnosemittel (53) mit der Ein-/Ausgabeeinrichtung (40) über eine proprietäre Verbindung und/oder über den internen Bus (37) kommunizieren.

7. Steuermodulanordnung nach einem der vorhergehenden Ansprüche, **dadurch gekennzeichnet, dass** sie die Ein-/Ausgabeeinrichtung (40) enthält oder die Ein-/Ausgabeeinrichtung (40) als ein Modul der Druckluft-Wartungseinheit (14) ausgestaltet ist.

8. Steuermodulanordnung nach einem der vorhergehenden Ansprüche, **dadurch gekennzeichnet, dass** die Diagnosemittel (53) Diagnose-Meldungen (48) des mindestens einen separaten Diagnose-Sensors (44-46) und/oder der Wartungsmodule (23-25) anhand mindestens einer Verknüpfungsbedingung zu den Diagnosedaten (51) verknüpfen.

9. Steuermodulanordnung nach einem der vorhergehenden Ansprüche, **dadurch gekennzeichnet, dass** die Diagnosemittel (53) bei der Bildung der Diagnosedaten (51) eine Datenreduktion durchführen.

10. Steuermodulanordnung nach einem der vorhergehenden Ansprüche, **dadurch gekennzeichnet, dass** die Diagnosedaten (51) ein durch einen Internet-Browser darstellbares Format aufweisen.

11. Steuermodulanordnung nach einem der vorhergehenden Ansprüche, **dadurch gekennzeichnet, dass** die Anschlussmittel (43) der Ein-/Ausgabeeinrichtung (40) zum Anschluss eines fluidtechnischen Schlauches mit mindestens einem elektrischen oder optischen Leiter zur Verbindung mit dem mindestens einen Diagnose-Sensor (44-46) und/oder dem mindestens einen Druckluftbeeinflussungsaktor (47) ausgestaltet sind.

12. Steuermodulanordnung nach einem der vorhergehenden Ansprüche, **dadurch gekennzeichnet, dass** sie Steuermittel (52), insbesondere eine speicherprogrammierbare Steuerung, zur Steuerung der Wartungsmodule (23-25) enthält.

13. Steuermodulanordnung nach einem der vorhergehenden Ansprüche, **dadurch gekennzeichnet, dass** sie erste Kommunikationsmittel (35) zur Kommunikation mit einer übergeordneten Steuervorrichtung (11) zur Steuerung und/oder Überwachung der Druckluft-Wartungseinheit (14) aufweist.

14. Steuermodulanordnung nach Anspruch 13, **dadurch gekennzeichnet, dass** die ersten Kommunikationsmittel (35) echtzeitfähig sind.

15. Steuermodulanordnung nach einem der vorhergehenden Ansprüche, **dadurch gekennzeichnet, dass** sie zweite Kommunikationsmittel (36) zur Kommunikation mit der übergeordneten Diagnosevorrichtung (18) aufweist, an der die Diagnosedaten (51) ausgebbar sind.

16. Steuermodulanordnung nach Anspruch 15, **dadurch gekennzeichnet, dass** sie die ersten Kommunikationsmittel (35) vorrangig vor den zweiten Kommunikationsmitteln (36) bedient:

17. Steuermodulanordnung nach Anspruch 15 oder 16, **dadurch gekennzeichnet, dass** sie über die ersten Kommunikationsmittel (35) weniger Diagnosemeldungen als über die zweiten Kommunikationsmittel (36) sendet.

18. Steuermodulanordnung nach einem der Ansprüche 15 bis 17, **dadurch gekennzeichnet, dass** die zweiten Kommunikationsmittel (36) eine Empfangssperre für vorbestimmte Steuerbefehle zur Steuerung der Druckluft-Wartungseinheit (14) aufweisen.

19. Steuermodulanordnung nach einem der Ansprüche 15 bis 18, **dadurch gekennzeichnet, dass** die zweiten Kommunikationsmittel (36) eine größere Übertragungsbandbreite als die ersten Kommunikationsmittel (35) aufweisen.

20. Steuermodulanordnung nach einem der Ansprüche 15 bis 19, **dadurch gekennzeichnet, dass** die ersten und/oder die zweiten Kommunikationsmittel (36) eine Bus-Schnittstelle aufweisen.

21. Steuermodulanordnung nach einem der vorhergehenden Ansprüche, **dadurch gekennzeichnet, dass** bei ihr Sendeparameter zum Senden von Diagnosedaten (51) einstellbar sind.

22. Steuermodulanordnung nach einem der vorhergehenden Ansprüche, **dadurch gekennzeichnet, dass** sie ein Steuermodul (21), das die Steuermittel (52) zur Steuerung der Wartungsmodule (23-25) enthält, und ein Diagnosemodul aufweist, das die Diagnosemittel (53) enthält.

23. Steuermodulanordnung nach einem der vorhergehenden Ansprüche, **dadurch gekennzeichnet, dass** sie eine Bediengeräte-schnittstelle zum Anschluss eines lokalen Bedien- und/oder Visualisierungsgeräts aufweist.

24. Druckluft-Wartungseinheit (14) mit mehreren aneinander gereihten Wartungsmodulen (23-25) wie z.B. Druckregler, Filter, Öler oder dergleichen, **dadurch gekennzeichnet, dass** sie eine Steuermodulanordnung (20) nach einem der vorhergehenden Ansprüche und eine mit der Steuermodulanordnung (20) zusammenwirkende Ein-/Ausgabeeinrichtung aufweist.

## Claims

1. Control module arrangement for a maintenance unit (14) of a battery-type structure, which comprises a plurality of contiguous conditioner modules (23-25) such as pressure regulator, filter, lubricator or the like and an input/output device (40), wherein the control module arrangement (20) is provided with bus communication means for communicating with the conditioner modules (23-25) via an internal bus (37) of the maintenance unit (14), **characterised in that** it comprises diagnostic means (53) for communication with the input/output device (40) of the maintenance unit (14), wherein the input/output device (40) comprises connecting means (43) for connecting at least one diagnostic sensor (44-46) separate from the maintenance unit (14) and/or at least one pneumatic air influencing actuator (47), wherein the control module arrangement (20) is capable of controlling the at least one pneumatic air influencing actuator (47) via the input/output device (40) and/or of receiving diagnostic messages (48) from the at least one separate diagnostic sensor (44-46), and **in that** the diagnostic means (53) are designed to generate diagnostic data (51) for a higher-level diagnostic device (18) for the diagnosis of at least one function of the maintenance unit (14) using diagnostic messages (48) of the at least one separate diagnostic sensor (44-46) and/or of the conditioner modules (23-25), so that the maintenance unit (14) forms a diagnostic node.

2. Control module arrangement according to claim 1, **characterised in that** the at least one diagnostic sensor (44-46) and/or the at least one air influencing actuator (47) is/are assigned to a separate unit which is in particular supplied with compressed air by the maintenance unit (14), in particular to a maintenance unit (14) or to a valve bank.

3. Control module arrangement according to claim 1 or 2, **characterised in that** it is designed for the control of the conditioner modules (23-25) and/or of the at least one air influencing actuator (47) separate from the maintenance unit (14) using the diagnostic messages (48) of the at least one separate diagnostic sensor (44-46) and/or of the conditioner modules (23-25).

4. Control module arrangement according to any of the preceding claims, **characterised in that** the at least one air influencing actuator (47) comprises a pneumatic valve and/or a pneumatic regulator.

5. Control module arrangement according to any of the preceding claims, **characterised in that** the at least one sensor comprises a magnetic sensor and/or an optical sensor and/or a pressure sensor and/or a temperature sensor and/or a flow meter and/or an electric measuring contactor.

6. Control module arrangement according to any of the preceding claims, **characterised in that** the diagnostic means (53) communicate with the input/output device (40) via a proprietary connection and/or via the internal bus (37).

7. Control module arrangement according to any of the preceding claims, **characterised in that** it includes the input/output device (40), or **in that** the input/output device (40) is designed as a module of the maintenance unit (14).

8. Control module arrangement according to any of the preceding claims, **characterised in that** the diagnostic means (53) link diagnostic messages (48) of the at least one separate diagnostic sensor (44-46) and/or of the conditioner modules (23-25) to the diagnostic data (51) using at least one logic condition.

9. Control module arrangement according to any of the preceding claims, **characterised in that** the diagnostic means (53) perform a data reduction when forming the diagnostic data (51).

10. Control module arrangement according to any of the preceding claims, **characterised in that** the diagnostic data (51) have a format which can be displayed by an internet browser.

11. Control module arrangement according to any of the preceding claims, **characterised in that** the connecting means (43) of the input/output device (40) are designed for the connection of a fluid power hose with at least one electric or optical conductor for connection to the at least one diagnostic sensor (44-46) and/or the at least one air influencing actuator (47).

12. Control module arrangement according to any of the preceding claims, **characterised in that** it includes control means (52), in particular a programmable logic controller, for the control of the conditioner modules (23-25).

13. Control module arrangement according to any of the preceding claims, **characterised in that** it comprises first communication means (35) for communication with a higher-level control unit (11) for controlling and/or monitoring the maintenance unit (14).

14. Control module arrangement according to claim 13, **characterised in that** the first communication means (35) have real-time capability.

15. Control module arrangement according to any of the preceding claims, **characterised in that** it comprises second communication means (36) for communication with the higher-level diagnostic device (18), where the diagnostic data (51) can be outputted.

16. Control module arrangement according to claim 15, **characterised in that** it gives priority to the first communication means (35) over the second communication means (36).

17. Control module arrangement according to claim 15 or 16, **characterised in that** it transmits fewer diagnostic messages via the first communication means (35) than via the second communication means (36).

18. Control module arrangement according to any of claims 15 to 17, **characterised in that** the second communication means (36) comprise a reception lock-out for predetermined control commands for controlling the maintenance unit (14).

19. Control module arrangement according to any of claims 15 to 18, **characterised in that** the second communication means (36) have a greater transmission band width than the first communication means (35).

20. Control module arrangement according to any of claims 15 to 19, **characterised in that** the first and/or the second communication means (36) comprise(s) a bus interface.

21. Control module arrangement according to any of the preceding claims, **characterised in that** transmission parameters can be set for the transmission of diagnostic data (51).

22. Control module arrangement according to any of the preceding claims, **characterised in that** it comprises a control module (21) containing the control means (52) for the control of the conditioner modules (23-25) and a diagnostic module containing the diagnostic means (53).

23. Control module arrangement according to any of the preceding claims, **characterised in that** it comprises a operator device interface for the connection of a local control and/or visualisation unit.

24. Maintenance unit (14) comprising a plurality of contiguous conditioner modules (23-25) such as pressure regulator, filter, lubricator or the like, **characterised in that** it comprises a control module arrangement (20) according to any of the preceding claims and an input/output device acting together with the control module arrangement (20).

## Revendications

1. Agencement modulaire de commande pour un groupe de traitement de l'air comprimé (14) conçu à la manière d'une batterie, lequel présente plusieurs modules de service (23-25) mis les uns à côté des autres, tels par exemple des régulateurs de pression, des filtres, des lubrificateurs et similaires, avec un dispositif d'entrée/sortie, l'agencement modulaire de commande (20) présentant des moyens de communication de bus pour la communication avec les modules de service (23-25) via un bus interne (37) du groupe de traitement (14), **caractérisé en ce qu'**il présente des moyens de diagnostic (53) pour la communication avec le dispositif d'entrée/sortie (40) du groupe de traitement (14), le dispositif d'entrée/sortie (40) présentant des moyens de raccordement (43) pour raccorder au moins un capteur de diagnostic (44-46) distinct du groupe de traitement (14) et/ou au moins un activateur d'influence de l'air comprimé pneumatique (47) distinct du groupe de traitement (14), l'agencement modulaire de commande (20) pouvant, grâce au dispositif d'entrée/sortie (40), commander cet au moins un activateur d'influence de l'air comprimé (47) et/ou pouvant réceptionner des messages de diagnostic (48) de la part de cet au moins un capteur de diagnostic distinct (44-46), et **en ce que** les moyens de diagnostic (53) sont réalisés de manière à pouvoir générer des données de diagnostic (51) pour un dispositif de diagnostic prioritaire (18) pour le diagnostic d'au moins une fonction du groupe de traitement de l'air comprimé (14) à l'aide des messages de diagnostic (48) de cet au moins un capteur de diagnostic distinct (44-46) et/ou des modules de service (23-25), de sorte que le groupe de traitement de l'air comprimé (14) forme un noeud de diagnostic.

2. Agencement modulaire de commande selon la revendication 1, **caractérisé en ce que** cet au moins un capteur de diagnostic distinct (44-46) et/ou cet au moins un activateur d'influence de l'air comprimé (47) est affecté à une unité distincte, en particulier alimentée en air comprimé par le groupe de traitement (14), en particulier à un groupe de traitement (14) ou une batterie de soupape.

3. Agencement modulaire de commande selon la revendication 1 ou 2, **caractérisé en ce qu'**il est réalisé pour la commande des modules de service (23-25) et/ou de cet au moins un activateur d'influence de l'air comprimé (47) distinct du groupe de traitement (14) à l'aide des messages de diagnostic (48) de cet au moins un capteur de diagnostic distinct (44-46) et/ou des modules de service (23-25).

4. Agencement modulaire de commande selon l'une des revendications précédentes, **caractérisé en ce que** cet au moins un activateur d'influence de l'air comprimé (47) comprend une soupape pneumatique et/ou un régulateur pneumatique.

5. Agencement modulaire de commande selon l'une des revendications précédentes, **caractérisé en ce que** cet au moins un capteur englobe un capteur magnétique et/ou un capteur optique et/ou un capteur de pression et/ou un capteur de température et/ou un débitmètre et/ou contacteur de mesure électrique.

6. Agencement modulaire de commande selon l'une des revendications précédentes, **caractérisé en ce que** les moyens de diagnostic (53) communiquent avec le dispositif d'entrée/sortie (40) via une liaison prioritaire et/ou via le bus interne (37).

7. Agencement modulaire de commande selon l'une des revendications précédentes, **caractérisé en ce qu'**il comprenne le dispositif d'entrée/sortie (40) ou bien **en ce que** le dispositif d'entrée/sortie (40) est réalisé en tant que module du groupe de traitement de l'air comprimé (14).

8. Agencement modulaire de commande selon l'une des revendications précédentes, **caractérisé en ce que** les moyens de diagnostic (53) établissent un lien entre les messages de diagnostic (48) de cet au moins un capteur de diagnostic distinct (44-46) et/ou des modules de service (23-25) à l'aide d'au moins une condition d'établissement d'un lien, et les données de diagnostic (51).

9. Agencement modulaire de commande selon l'une des revendications précédentes, **caractérisé en que** les moyens de diagnostic (53) effectuent une réduction des données lors de la formation des données de diagnostic (51).

10. Agencement modulaire de commande selon l'une des revendications précédentes, **caractérisé en ce que** les données de diagnostic (51) présentent un format pouvant être représenté par un navigateur Internet.

11. Agencement modulaire de commande selon l'une des revendications précédentes, **caractérisé en ce que** les moyens de raccordement (43) du dispositif d'entrée/sortie (40) sont conçus pour le raccordement d'un tuyau relevant de la technique des fluides avec au moins un conducteur électrique ou optique pour la connexion avec cet au moins un capteur de diagnostic (44-46) et/ou cet au moins un activateur d'influence de l'air comprimé (47).

12. Agencement modulaire de commande selon l'une des revendications précédentes, **caractérisé en ce qu'**il comprenne des moyens de commande (52), en particulier une commande à mémoire programmable, pour la commande des modules de service (23-25).

13. Agencement modulaire de commande selon l'une des revendications précédentes, **caractérisé en ce qu'**il présente des premiers moyens de communication (35) pour la communication avec un dispositif de commande prioritaire (11) pour la commande et/ou la surveillance du groupe de traitement de l'air comprimé (14).

14. Agencement modulaire de commande selon la revendication 13, **caractérisé en ce que** les premiers moyens de communication (35) sont capables de fonctionner en temps réel.

15. Agencement modulaire de commande selon l'une des revendications précédentes, **caractérisé en ce qu'**il présente des deuxièmes moyens de communication (36) pour la communication avec le dispositif de diagnostic prioritaire (18) auquel les données de diagnostic (51) peuvent être délivrées.

16. Agencement modulaire de commande selon la revendication 15, **caractérisé en ce qu'**il utilise les premiers moyens de communication (35) de manière prioritaire avant les deuxièmes moyens de communication (36).

17. Agencement modulaire de commande selon la revendication 15 ou 16, **caractérisé en ce qu'**il envoie moins de messages de diagnostic par l'intermédiaire des premiers moyens de communication (35) que par l'intermédiaire des deuxièmes moyens de communication (36).

18. Agencement modulaire de commande selon l'une des revendications 15 à 17, **caractérisé en ce que** les deuxièmes moyens de diagnostic (36) présentent un blocage de réception pour des instructions de commande prédéterminées pour la commande du groupe de traitement de l'air comprimé (14).

19. Agencement modulaire de commande selon l'une des revendications 15 à 18, **caractérisé en ce que** les deuxièmes moyens de communication (36) présentent une largeur de bande de transmission plus importante que les premiers moyens de communication (35).

20. Agencement modulaire de commande selon l'une des revendications 15 à 19, **caractérisé en ce que** les premiers et/ou deuxièmes moyens de communication (36) présentent une interface de bus.

21. Agencement modulaire de commande selon l'une des revendications précédentes, **caractérisé en ce qu'**il permet le réglage de paramètres d'envoi pour l'envoi de données de diagnostic (51).

22. Agencement modulaire de commande selon l'une des revendications précédentes, **caractérisé en ce qu'**il présente un module de commande (21) comprenant les moyens de commande (52) pour la commande des modules de service (23-25) ainsi qu'un module de diagnostic, lequel comprend les moyens de diagnostic (53).

23. Agencement modulaire de commande selon l'une des revendications précédentes, **caractérisé en ce qu'**il présente une interface d'appareil de commande pour le raccordement d'un appareil de commande et/ou de visualisation local.

24. Groupe de traitement de l'air comprimé (14) avec plusieurs modules de service (23-25) mis les uns à côté des autres, tels par exemple des régulateurs de pression, des filtres, des lubrificateurs ou similaires, **caractérisé en ce qu'**il présente un agencement modulaire de commande (20) selon l'une des revendications précédentes et un dispositif d'entrée/sortie coopérant avec l'agencement modulaire de commande (20).
